# EUROPEAN PATENT APPLICATION

(11) **EP 4 749 944 A2**
(43) Date of publication of application: **27.05.2026**
(21) Application number: 25217205.1
(22) Date of filing: 20.11.2025
(51) Int. Cl.: H04B 7/0456, H04L 5/00

(54) **ESTIMATING CHANNEL PROPERTIES IN COMMUNICATIONS**

(30) Priority: 22.11.2024 FI 20246369
(71) Applicant: Nokia Solutions and Networks Oy, 02610 Espoo (FI)
(72) Inventor: UPADHYA, Karthik, Bangalore (IN); JAIN, Akshay, Helsinki (FI)
(74) Representative: Nokia EPO representatives

(57) **Abstract**

An apparatus may generate (6002), based on computed estimates on channel properties, at least one initial solution to an optimization problem or iterative algorithm. The apparatus may generate the computed estimates by a radio-aware digital twin, RADT.

## Description

### FIELD

The following example embodiments relate to wireless communication and to estimating channel properties.

### BACKGROUND

Resource allocation mechanisms may be non-convex in nature, and they may be sensitive to inputs provided to them. For example, incorrect channel quality indicator (CQI) information may lead to incorrect assignment of resource block groups (RBG), which may lead to a cascading effect of poor performance over multiple transmission time intervals (TTI). Additionally, machine learning methods, such as reinforcement learning based approaches, may require an expert policy to be able to efficiently learn the best policy for performing resource allocation.

### BRIEF DESCRIPTION

The scope of protection sought for various example embodiments is set out by the independent claims. The example embodiments and features, if any, described in this specification that do not fall under the scope of the independent claims are to be interpreted as examples useful for understanding various embodiments.

According to an aspect, there is provided an apparatus comprising at least one processor, and at least one memory storing instructions that, when executed by the at least one processor, cause the apparatus at least to:
based on computed estimates on channel properties, generate at least one initial solution to an optimization problem or iterative algorithm.

According to another aspect, there is provided an apparatus comprising:
means for generating at least one initial solution to an optimization problem or iterative algorithm, based on computed estimates on channel properties.

According to another aspect, there is provided a method comprising, by a network apparatus:
based on computed estimates on channel properties, generating at least one initial solution to an optimization problem or iterative algorithm.

According to another aspect, there is provided a computer program comprising instructions which, when executed by an apparatus, cause the apparatus to perform at least the following:
based on computed estimates on channel properties, generate at least one initial solution to an optimization problem or iterative algorithm.

According to another aspect, there is provided a computer readable medium comprising program instructions which, when executed by an apparatus, cause the apparatus to perform at least the following:
based on computed estimates on channel properties, generate at least one initial solution to an optimization problem or iterative algorithm.

According to another aspect, there is provided a non-transitory computer readable medium comprising program instructions which, when executed by an apparatus, cause the apparatus to perform at least the following:
based on computed estimates on channel properties, generate at least one initial solution to an optimization problem or iterative algorithm.

### LIST OF DRAWINGS

In the following, various example embodiments will be described in greater detail with reference to the accompanying drawings, in which
FIG. 1 illustrates an example of a wireless communication network;
FIG. 2 illustrates an existing scheduling method;
FIG. 3 illustrates scheduling using RADT according to an exemplary embodiment;
FIG. 4 illustrates mMIMO precoding according to an exemplary embodiment;
FIGs 5 and 6 illustrate an exemplary method;
FIG. 7 illustrates an exemplary apparatus.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Some example embodiments described herein may be implemented in a wireless communication network comprising a radio access network based on one or more of the following radio access technologies (RATs): Global System for Mobile Communications (GSM) or any other second generation radio access technology, Universal Mobile Telecommunication System (UMTS, 3G) based on basic wideband-code division multiple access (W-CDMA), high-speed packet access (HSPA), Long Term Evolution (LTE), LTE-Advanced, fourth generation (4G), fifth generation (5G), 5G new radio (NR), 5G-Advanced (i.e., 3GPP NR Rel-18 and beyond), or sixth generation (6G). Some examples of radio access networks include the universal mobile telecommunications system (UMTS) radio access network (UTRAN), the Evolved Universal Terrestrial Radio Access network (E-UTRA), or the next generation radio access network (NG-RAN). The wireless communication network may further comprise a core network, and some example embodiments may also be applied to network functions of the core network.

It should be noted that the embodiments are not restricted to the wireless communication network given as an example, but a person skilled in the art may also apply the solution to other wireless communication networks or systems provided with necessary properties. For example, some example embodiments may also be applied to a communication system based on IEEE 802.11 specifications, or a communication system based on IEEE 802.15 specifications. IEEE is an abbreviation for the Institute of Electrical and Electronics Engineers.

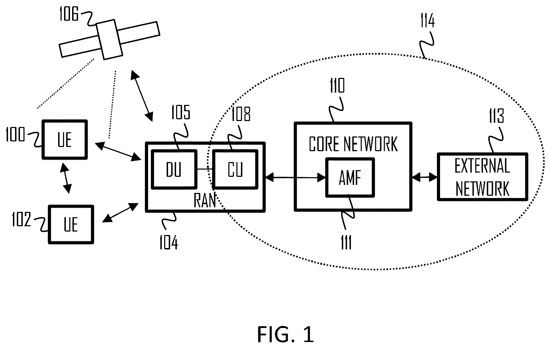

FIG. 1 depicts an example of a simplified wireless communication network showing some physical and logical entities. The connections shown in FIG. 1 may be physical connections or logical connections. It is apparent to a person skilled in the art that the wireless communication network may also comprise other physical and logical entities than those shown in FIG. 1.

The example embodiments described herein are not, however, restricted to the wireless communication network given as an example but a person skilled in the art may apply the example embodiments described herein to other wireless communication networks provided with necessary properties.

The example wireless communication network shown in FIG. 1 includes a radio access network (RAN) and a core network 110.

FIG. 1 shows user equipment (UE) 100, 102 configured to be in a wireless connection on one or more communication channels in a radio cell with an access node 104 of a radio access network.

The access node 104 may comprise a computing device configured to control the radio resources of the access node 104 and to be in a wireless connection with one or more UEs 100, 102. The access node 104 may also be referred to as a base station, a base transceiver station (BTS), an access point, a cell site, a network node, a radio access network node, or a RAN node. The access node 104 may be, for example, an evolved NodeB (abbreviated as eNB or eNodeB), or a next generation evolved NodeB (abbreviated as ng-eNB), or a next generation NodeB (abbreviated as gNB or gNodeB), providing the radio cell. The access node 104 may include or be coupled to transceivers. From the transceivers of the access node 104, a connection may be provided to an antenna unit that establishes a bidirectional radio link to one or more UEs 100, 102. The antenna unit may comprise an antenna or antenna element, or a plurality of antennas or antenna elements.

The wireless connection (e.g., radio link) from a UE 100, 102 to the access node 104 may be called uplink (UL) or reverse link, and the wireless connection (e.g., radio link) from the access node 104 to the UE 100, 102 may be called downlink (DL) or forward link. A UE 100 may also communicate directly with another UE 102, and vice versa, via a wireless connection generally referred to as a sidelink (SL). It should be appreciated that the access node 104 or its functionalities may be implemented by using any node, host, server, access point or other entity suitable for providing such functionalities.

The radio access network may comprise more than one access node 104, in which case the access nodes may also be configured to communicate with one another over wired or wireless links. These links between access nodes may be used for sending and receiving control plane signaling and also for routing data from one access node to another access node.

The access node 104 may further be connected to a core network (CN) 110. The core network 110 may comprise an evolved packet core (EPC) network and/or a 5^{th} generation core network (5GC). The EPC may comprise network entities, such as a serving gateway (S-GW for routing and forwarding data packets), a packet data network gateway (P-GW) for providing connectivity of UEs to external packet data networks, and/or a mobility management entity (MME). The 5GC may comprise one or more network functions, such as at least one of: an access and mobility management function (AMF) 111, a user plane function (UPF), a location management function (LMF), and/or a session management function (SMF).

The core network 110 may also be able to communicate with one or more external networks 113, such as a public switched telephone network or the Internet, or utilize services provided by them. For example, in 5G wireless communication networks, the UPF of the core network 110 may be configured to communicate with an external data network via an N6 interface. In LTE wireless communication networks, the P-GW of the core network 110 may be configured to communicate with an external data network.

It should also be understood that the distribution of functions between core network operations and access node operations may differ in future wireless communication networks compared to that of the LTE or 5G, or even be non-existent.

The illustrated UE 100, 102 is one type of an apparatus to which resources on the air interface may be allocated and assigned. The UE 100, 102 may also be called a wireless communication device, a subscriber unit, a mobile station, a remote terminal, an access terminal, a user terminal, a terminal device, or a user device, just to mention but a few names. The UE 100, 102 may be a computing device operating with or without a subscriber identification module (SIM), including, but not limited to, the following types of computing devices: a mobile phone, a smartphone, a personal digital assistant (PDA), a handset, a computing device comprising a wireless modem (e.g., an alarm or measurement device, etc.), a laptop computer, a desktop computer, a tablet, a game console, a notebook, a multimedia device, a reduced capability (RedCap) device, a wearable device (e.g., a watch, earphones or eyeglasses) with radio parts, a sensor comprising a wireless modem, or a computing device comprising a wireless modem integrated in a vehicle.

It should be appreciated that the UE 100, 102 may also be a nearly exclusive uplink-only device, of which an example may be a camera or video camera loading images or video clips to a network. The UE 100, 102 may also be a device having capability to operate in an Internet of Things (IoT) network, which is a scenario in which objects may be provided with the ability to transfer data over a network without requiring human-to-human or human-to-computer interaction.

The wireless communication network may also be able to support the usage of cloud services. For example, at least part of core network operations may be carried out as a cloud service (this is depicted in FIG. 1 by "cloud" 114). The UE 100, 102 may also utilize the cloud 114. In some applications, the computation for a given UE may be carried out in the cloud 114 or in another UE.

The wireless communication network may also comprise a central control entity, such as a network management system (NMS), or the like. The NMS is a centralized suite of software and hardware used to monitor, control, and administer the network infrastructure. The NMS is responsible for a wide range of tasks such as fault management, configuration management, security management, performance management, and accounting management. The NMS enables network operators to efficiently manage and optimize network resources, ensuring that the network delivers high performance, reliability, and security.

5G enables using multiple-input and multiple-output (MIMO) antennas in the access node 104 and/or the UE 100, 102, many more base stations or access nodes than an LTE network (a so-called small cell concept), including macro sites operating in co-operation with smaller stations and employing a variety of radio technologies depending on service needs, use cases and/or spectrum available. 5G wireless communication networks may support a wide range of use cases and related applications including video streaming, augmented reality, different ways of data sharing and various forms of machine-type applications, such as (massive) machine-type communications (mMTC), including vehicular safety, different sensors and real-time control.

In 5G wireless communication networks, access nodes and/or UEs may have multiple radio interfaces, such as below 6 gigahertz (GHz), centimeter wave (cmWave) and millimeter wave (mmWave), and also being integrable with legacy radio access technologies, such as LTE. Integration with LTE may be implemented, for example, as a system, where macro coverage may be provided by LTE, and 5G radio interface access may come from small cells by aggregation to LTE. In other words, a 5G wireless communication network may support both inter-RAT operability (such as interoperability between LTE and 5G) and inter-RI operability (inter-radio interface operability, such as between below 6GHz, cmWave, and mmWave).

5G wireless communication networks may also apply network slicing, in which multiple independent and dedicated virtual sub-networks (network instances) may be created within the same physical infrastructure to run services that have different requirements on latency, reliability, throughput and mobility.

In one embodiment, an access node 104 may comprise: a radio unit (RU) comprising a radio transceiver (TRX), i.e., a transmitter (Tx) and a receiver (Rx); one or more distributed units (DUs) 105 that may be used for the so-called Layer 1 (L1) processing and real-time Layer 2 (L2) processing; and a central unit (CU) 108 (also known as a centralized unit) that may be used for non-real-time L2 and Layer 3 (L3) processing. The CU 108 may be connected to the one or more DUs 105 for example via an F1 interface. Such an embodiment of the access node 104 may enable the centralization of CUs relative to the cell sites and DUs, whereas DUs may be more distributed and may even remain at cell sites. The CU and DU together may also be referred to as baseband or a baseband unit (BBU). The CU and DU may also be comprised in a radio access point (RAP).

The CU 108 may be a logical node hosting radio resource control (RRC), service data adaptation protocol (SDAP) and/or packet data convergence protocol (PDCP), of the NR protocol stack for an access node 104. The CU 108 may comprise a control plane (CU-CP), which may be a logical node hosting the RRC and the control plane part of the PDCP protocol of the NR protocol stack for the access node 104. The CU 108 may further comprise a user plane (CU-UP), which may be a logical node hosting the user plane part of the PDCP protocol and the SDAP protocol of the CU for the access node 104.

The DU 105 may be a logical node hosting radio link control (RLC), medium access control (MAC) and/or physical (PHY) layers of the NR protocol stack for the access node 104. The operations of the DU 105 may be at least partly controlled by the CU 108. It should also be understood that the distribution of functions between the DU 105 and the CU 108 may vary depending on the implementation.

Cloud computing systems may also be used to provide the CU 108 and/or DU 105. A CU provided by a cloud computing system may be referred to as a virtualized CU (vCU). In addition to the vCU, there may also be a virtualized DU (vDU) provided by a cloud computing system. Furthermore, there may also be a combination, where the DU may be implemented on so-called bare metal solutions, for example application-specific integrated circuit (ASIC) or customer-specific standard product (CSSP) system-on-a-chip (SoC).

Edge cloud may be brought into the radio access network by utilizing network function virtualization (NFV) and software defined networking (SDN). Using edge cloud may mean access node operations to be carried out, at least partly, in a computing system operationally coupled to a remote radio head (RRH) or a radio unit (RU) of an access node 104. It is also possible that access node operations may be performed on a distributed computing system or a cloud computing system located at the access node 104. Application of cloud RAN architecture enables RAN real-time functions being carried out at the radio access network (e.g., in a DU 105), and non-real-time functions being carried out in a centralized manner (e.g., in a CU 108).

5G (or new radio, NR) wireless communication networks may support multiple hierarchies, where multi-access edge computing (MEC) servers may be placed between the core network 110 and the access node 104. It should be appreciated that MEC may be applied in LTE wireless communication networks as well.

A 5G wireless communication network ("5G network") may also comprise a non-terrestrial communication network, such as a satellite communication network, to enhance or complement the coverage of the 5G radio access network. For example, satellite communication may support the transfer of data between the 5G radio access network and the core network 110, enabling more extensive network coverage. Possible use cases may include: providing service continuity for machine-to-machine (M2M) or Internet of Things (IoT) devices or for passengers on board of vehicles, or ensuring service availability for critical communications, and future railway, maritime, or aeronautical communications. Satellite communication may utilize geostationary earth orbit (GEO) satellite systems, but also low earth orbit (LEO) satellite systems, in particular mega-constellations (i.e., systems in which hundreds of (nano)satellites are deployed). A given satellite 106 in the mega-constellation may cover several satellite-enabled network entities that create on-ground cells. The on-ground cells may be created through an on-ground relay access node or by an access node located on-ground or in a satellite.

It is obvious for a person skilled in the art that the access node 104 depicted in FIG. 1 is just an example of a part of a radio access network, and in practice the radio access network may comprise a plurality of access nodes 104, the UEs 100, 102 may have access to a plurality of radio cells, and the radio access network may also comprise other apparatuses, such as physical layer relay access nodes or other entities. At least one of the access nodes may be a Home eNodeB or a Home gNodeB. A Home gNodeB or a Home eNodeB is a type of access node that may be used to provide indoor coverage inside a home, office, or other indoor environment.

Additionally, in a geographical area of a radio access network, a plurality of different kinds of radio cells as well as a plurality of radio cells may be provided. Radio cells may be macro cells (or umbrella cells) which may be large cells having a diameter of up to tens of kilometers, or smaller cells such as micro-, femto- or picocells. The access node(s) 104 of FIG. 1 may provide any kind of these cells. A cellular radio network may be implemented as a multilayer access networks including several kinds of radio cells. In multilayer access networks, one access node may provide one kind of a radio cell or radio cells, and thus a plurality of access nodes may be needed to provide such a multilayer access network.

For fulfilling the need for improving performance of radio access networks, the concept of "plug-and-play" access nodes may be introduced. A radio access network, which may be able to use "plug-and-play" access nodes, may include, in addition to Home eNodeBs or Home gNodeBs, a Home Node B gateway (HNB-GW) (not shown in FIG. 1). An HNB-GW, which may be installed within an operator's radio access network, may aggregate traffic from a large number of Home eNodeBs or Home gNodeBs back to a core network 110 of the operator.

Some example embodiments are described below using principles and terminology of 5G radio access technology without limiting the example embodiments to 5G radio access technology, however.

A digital twin (DT) may involve a digital or virtual representation of a physical asset or process. Digital twins may be used to optimize operations, and to enable higher levels of productivity and efficiency. A radio-aware digital twin (RADT) may be a digital representation of a radio propagation environment. The digital twin may have knowledge on a radio network, e.g. on transmitting and receiving nodes, their location and radio capabilities, etc. The digital twin may also maintain a database that may be referred to as a radio environment map (REM). REM may have information on radio propagation and/or channel quality in a geographical area of the network, typically divided into bins of NxM meters. The digital twin may map independent variables in a communication system, such as user equipment (UE), base-station (BS), and interferer locations and trajectories, transmit powers, time and frequency resource allocation, and propagation environment characteristics, etc. to a signal-to-interference plus noise ratio (SINR) and/or block error rate (BLER) of the communication link between the BS and UE.

The UEs may be machines, i.e. automated guided vehicles (AGV), unmanned aerial vehicles (UAV), or fixed machines. The trajectories of such UEs may be known or controlled accurately. The radio-aware DT may then be used to proactively and/or based-on-intent perform time-frequency resource allocation, perform modulation coding scheme (MCS) adaptation, decide on handovers, etc. by predicting radio conditions at the UE without requiring explicit measurements or reference symbol transmission. Thus, the radio-aware DT may be able to improve the spectral and energy efficiency of the network.

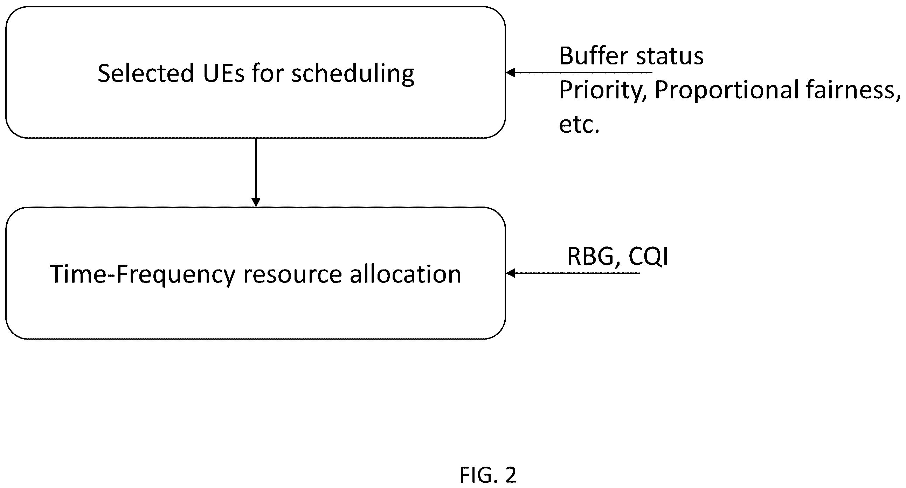

Resource allocation mechanisms may be layer-2 (L2) mechanisms relying on heuristics to perform the assignment of time-frequency resources at the gNodeB (gNB). Machine learning methods, such as reinforcement learning based approaches, may require an expert policy to be able to efficiently learn the best policy for performing resource allocation, which may require extensive parallel system level simulations or real data collection runs, both of which may be very expensive, time consuming, and sensitive to human error. The RADT may be used to reduce the overhead associated with downlink control signaling. The RADT may utilize predictions from the RADT to a lower signaling overhead by clubbing several control transmissions so that the UEs may be put on a script. The RADT may collect the locations and trajectories of the UEs, gNBs, and obstacles in the environment over the future time-interval [0,T] where T is a design parameter. Then, by utilizing ray tracing, the RADT may obtain channel parameters over the interval [0,T], which may then be used to perform resource allocation. Such a predecided resource allocation may reduce control channel overhead, assuming that highly accurate ray tracing is available, and that the UE location error is less than half wavelength. However, real-time ray tracing with accurate solvers, such as physical optics or Maxwell equation solvers, may be extremely computationally intensive and getting sub-half wavelength localization error may require techniques, such as LIDAR, which may be very expensive. The accuracy of the RADT may be improved by updating the predictions with actual measurements. An estimate of the CSI from the RADT given the location of the UE may be computed. At the same time, CSI measurements may also be collected. Multi-path components (MPC) may be evaluated from both CSI sources, measured and obtained from the RADT, and then be compared. The comparison may be performed to identify multipath components that correspond to each other. Next, interaction points may also be obtained from the MPCs, and be used to update the building vector data map. The CSI for a given UE location for an FDD (frequency division duplex) cell-free mMIMO (multi-user multiple input multiple output) system may be obtained in order to reduce reporting overhead. A database may provide the CSI for the given set of UE locations. For UE locations that are not present in this set, a neural network may be used to interpolate the CSI. Figure 2 illustrates an existing scheduling method.

A more practical approach may be to employ a hybrid approach where low-complexity real-time ray tracing may be utilized, as well as measurements that may be obtained in real-time. Thus, instead of, or in addition to reducing the DL control signaling overhead, it may be desired to reduce real-time complexity at the DU.

Resource allocation, power control, and precoding algorithms may require solving optimization problems in an iterative manner. These problems may be impossible to solve optimally in real time. Some of these problems may be NP-hard/NP-complete to solve. Even with convex optimization problems that may have an optimal solution and be computed in polynomial time, computing them may require solving an iterative algorithm for several iterations, especially for large scale problems where only first-order solvers may be employed. Even when not solving an optimization problem, radio algorithms may be iterative and start with an initialization to generate a solution after running for a fixed number of iterations.

The number of iterations may have to be at least enough for the algorithms to have converged, but this number may be large, especially for first-order algorithms. Under real-time constraints, the number of iterations may be small and may not be enough for the solution to have converged fully. The quality of the resulting (sub-optimal) solution may depend on the quality of initialization, the number of candidate initialization points, the number of real-time iterations, and/or the nature of the optimization problem. The quality of initialization may refer to how close the initialization point of the solver is to the optimal solution, where the initialization point may be obtained heuristically, and better initialization may sometimes be obtained at a higher computation complexity. The number of candidate initialization points may refer to that there may also be more than one initialization point, and the solver may be run separately for each initialization, wherein the output may then be chosen as the result of the best initialization, and increasing the number of candidate initialization points may also increase computation complexity. The number of real-time iterations may refer to that both iterative algorithms and optimization problems that may be solved iteratively, may generate solutions the quality of which may strongly depend on the number of iterations, wherein the number of iterations may determine how far the obtained solution is far from the optimal, or the solution obtained after convergence. The nature of the optimization problem may be decided by the number of local optima. Thus, the quality of the solution to an optimization problem, or the performance of an iterative algorithm, may depend on the number of computations used to solve the problem. Since real-time complexity may both be expensive and limited, the resulting solution may be far from optimum.

Optimization problems, such as resource allocation, power control, and/or precoding, may be solved in a semi-real-time manner instead of in real time. The RADT may be employed to generate estimates of parameters, such as path-loss, power delay profile, covariance matrices, CQI, and/or other similar channel parameters, based on the location(s) and/or orientation(s) of the UEs, gNBs, and/or objects in the radio environment. These estimates may be obtained for several seconds into the future. For example, in a fully automated factory environment where the current and future locations of the UE are known and there are no additional sources of randomness, the RADT may be used to obtain the path-loss for future UE locations. Since the calculation of the estimates may be carried out in non-real-time, the estimates may also be used to obtain one or more initialization points in non-real-time. Given these initialization points, the final optimization problem may be solved based on actual measurements obtained. Thereby, a reduction of the real-time complexity by obtaining a better initialization point with the RADT, may be achieved. Real-time convex and/or non-convex optimization problems and/or other iterative algorithms may be converted to semi-real-time problems with the RADT, by initializing the real-time algorithm with solutions from the RADT. Real-time complexity at L2, or the DU, may be transformed to non-real-time complexity in the cloud.

The RADT may be used to initialize a non-convex optimization problem. The process may start by the RADT running at the cloud computing engine retrieving UE locations and orientations. The UEs here may be assumed to be automated guided vehicles (AGV), or unmanned aerial vehicles (UAV) that are aware of their locations on the factory floor. Given these locations, the RADT may calculate an estimate of the channel properties, such as path-loss, power delay profile, and/or spatial covariance matrices, etc. that may be used for solving optimization problems, such as resource allocation, precoding, and/or power control. These estimates on the channel properties may be calculated using ray-tracing and/or by solving electromagnetic equations. These estimates may not be directly usable to obtain the final solution, since the estimates from the RADT may differ from the actual measurements owing to position errors and limitations in modelling the environment. Given the estimates, a convex/non-convex optimization problem or an iterative algorithm may be solved with N_{NR} number of non-real-time iterations at the cloud computing engine. The obtained solution may then be forwarded to the DU as an initialization to the optimization problem. Measurements of the channel parameters may be collected between the UEs and the gNBs. The results of these measurements may be different from the RADT estimates, because of positioning and modelling errors. The optimization problem and/or iterative algorithm may be solved again at the DU with N_{R} number of real-time iterations utilizing the measurement results, and the initialization. A final solution may be obtained, which may be applied to the radio system.

In addition to the resource allocation performed on PDSCH and PUSCH, resource allocation for PDCCH and PUCCH may also be performed by the scheduler. Specifically for downlink (DL) and uplink (UL) scheduling, the scheduler may first verify whether the UEs which may be in a RRC connected state, are eligible for scheduling. Conditions for determining a UE to be eligible for scheduling may include: presence of data in buffer (UL and DL), pending RACH messages (message2 in UL and message3 in DL), pending retransmissions or UL transmissions/retransmissions/HARQ/scheduling grants. The UEs selected at this stage may be referred to as a pre-scheduler candidate set. From pre-scheduler candidate set, the scheduler may select 50 UEs and include them in another set which may be referred to as a candidate set-1 (CS1). This selection may be performed based on the priority class which is assigned depending on the type of traffic the UE has in its buffer. Upon the UE having several priority classes, the highest amongst those priority classes may be selected as its priority class. For each priority class, separate queues may be created, while maintaining the maximum number of UEs in CS1 at 50. Subsequently, the scheduler may perform the time-domain (TD) scheduling for each of the UEs in CS1, wherein firstly the TD metric for each UE in CS1 may be computed. The TD metric calculation may be performed based on the traffic type, as well as the proportional fairness (PF) criteria. Subsequently, assuming that the gNB is able to support N number of beams in a given slot, the top N number of UEs based on TD metric may be selected in a new set called a candidate set-2 (CS2). Each of the UEs in CS2 may then be used for frequency domain (FD) scheduling, wherein for the DL the scheduler may allocate resource block groups (RBG), whereas in the UL the resource allocation may be at a PRB level granularity. During FD scheduling, the UEs may be allocated FD resources by utilizing a weighted round robin (WRR) algorithm. WRR may allocate resources in a cyclic manner, wherein each UE receives PRBs/RBGs as determined by their scheduling weight. The scheduling weight may be implementation-specific to a given vendor. The RBG allocation for each UE may be performed in a contiguous manner. Therefore, for an optimal resource allocation strategy, the number of combinations may scale significantly with the number of available RBGs and number of UEs selected in CS2. When allocating contiguous RBGs, the channel quality indicator (CQI) used for modulation and coding scheme (MCS) selection may be averaged across the RBGs. For non-contiguous RBG allocations, the number of combinations may scale directly with the number of RBGs available and the number of UEs.

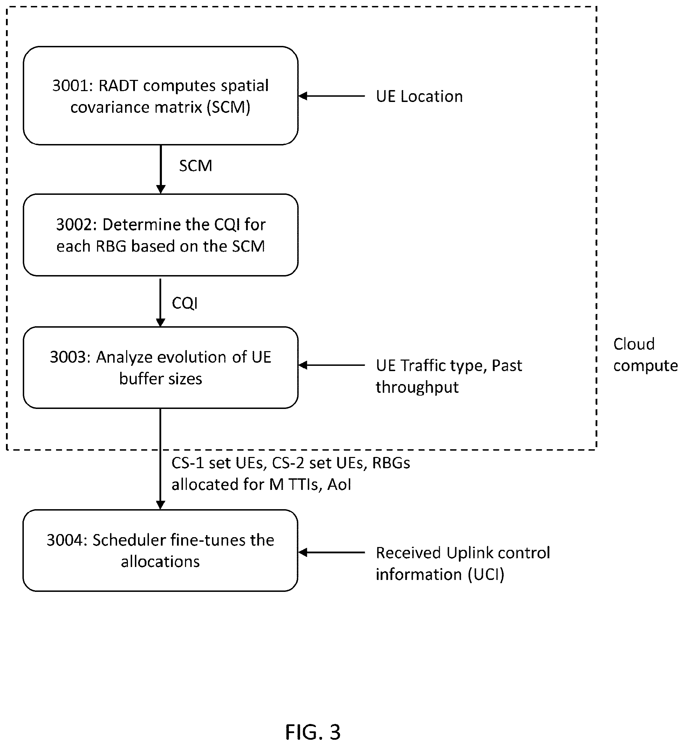

Figure 3 illustrates a scheduling method using RADT according to an exemplary embodiment. In item 3001, the RADT may be used to compute a spatial covariance matrix (SCM) based on UE location(s). To generate optimal resource allocation without sacrificing processing time, the RADT may be used to generate the channel responses for a given scenario. In item 3002, the RADT may be used to determine the CQI for each RBG for a given user device based on the spatial covariance matrix (SCM) and/or channel state information. In item 3003, the RADT and the available CQI may be used to analyze and/or predict the evolution of UE buffer size. UE traffic type and/or past troughput may be used for the analyzing. The CS-1 set UEs, CS-2 set UEs and initial set of RBGs allocated for each UE in CS-2 may be provided for M number of TTIs/slots in advance. The age of information (AoI) may be utilized as a metric to determine the upper-bound of M. In item, 3004, the scheduler may fine-tune or adjust the allocations with real-time information from the received uplink control information (UCI). The CS-1 set UEs, CS-2 set UEs, the RBGs allocated for M number of TTIs, and/or the AoI may be utilized for the fine-tuning or adjusting. This may enable reducing the computational complexity of the scheduler at the gNB, as well as improvise decision-making by offloading complex computations to the cloud computing platforms. The cloud computing platforms may not necessarily be constrained by time constraints, nor by computing resources.

In an embodiment, an apparatus, such as a gNB, may, based on computed estimates on channel properties, generate at least one initial solution to an optimization problem and/or iterative algorithm. The apparatus may generate the computed estimates on the channel properties by the radio-aware digital twin, RADT. The apparatus may solve the optimization problem or iterative algorithm based on actual channel properties, using the at least one initial solution as a starting point.

In an embodiment, the apparatus may generate the at least one initial solution to the optimization problem or iterative algorithm using non-real-time iterations at a cloud computing engine. The apparatus may, based on the at least one initial solution, and actual channel properties obtained by real-time measurements on the channel properties, generate a final solution to the optimization problem or iterative algorithm using real-time iterations at a cloud computing engine.

In an embodiment, the optimization problem may relate to at least one of resource allocation, precoding, and/or power control. The precoding may comprise multi-user MIMO precoding, and the apparatus may compute estimates of spatial covariance matrices, iteratively minimize largest eigenvalues of the estimates of the spatial covariance matrices, measure actual spatial covariance matrices, and solve the optimization problem by iteratively minimizing eigenvalues of the measured actual spatial covariance matrices, by using the iteratively minimized largest eigenvalues as an initialization. The resource allocation may comprise multi-user MIMO resource allocation, and the apparatus may, based on channel state information, generate channel responses and determine a channel quality indicator for each resource block group, RBG, for a selected user device, based on the channel quality indicator, predict evolution of a user device buffer size, select a 1^{st} candicate set of user devices, a 2^{nd} candidate set of user devices, and an initial set of resource block groups allocated for each user device in the 2^{nd} candidate set for an M number of transmission time intervals/time slot in advance, wherein a maximum value of M is determined by using age of information, AoI, and adjust, by a scheduler, resource allocations based on real-time information received from uplink control information, UCI.

In an embodiment, the channel properties may comprise uplink channel properties and/or downlink channel properties. The channel properties may comprise channel properties between the apparatus, and user devices selected from automated guided vehicles, AGV, or unmanned aerial vehicles, UAV. The apparatus may be, comprise, or be comprised in a network node, such as a gNB.

In an embodiment, a method and a non-transitory computer readable medium comprising program instructions are disclosed for performing the above functions by the apparatus.

The estimates on the channel properties may be computed based on transmitter locations, receiver locations, transmitter orientations, and/or receiver orientations of user devices. The channel properties may comprise one or more of path-loss, power delay profile(s), and/or spatial covariance matrices. The estimates on the channel properties may be computed using ray-tracing, and/or by solving electromagnetic equations.

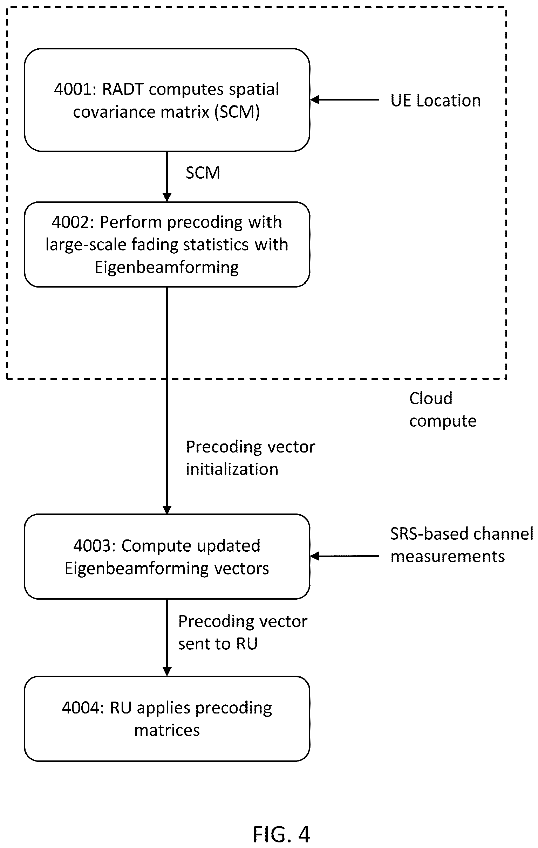

Figure 4 illustrates a mMIMO precoding method according to an exemplary embodiment. In item 4001, the RADT may be used to compute the spatial covariance matrix (SCM) using UE location(s). In item 4002, the spatial covariance matrix (SCM) may be utilized in performing precoding with large-scale fading statistics with eigenbeamforming. Cloud computing may be used in items 4001 and/or 4002. In item 4003, precoding vector initialization may be used to compute updated eigenbeamforming vectors based on sounding reference signal (SRS) based measurements. In item 4003, a precoding vector sent to the radio unit may be used in the radio unit to apply precoding matrices.

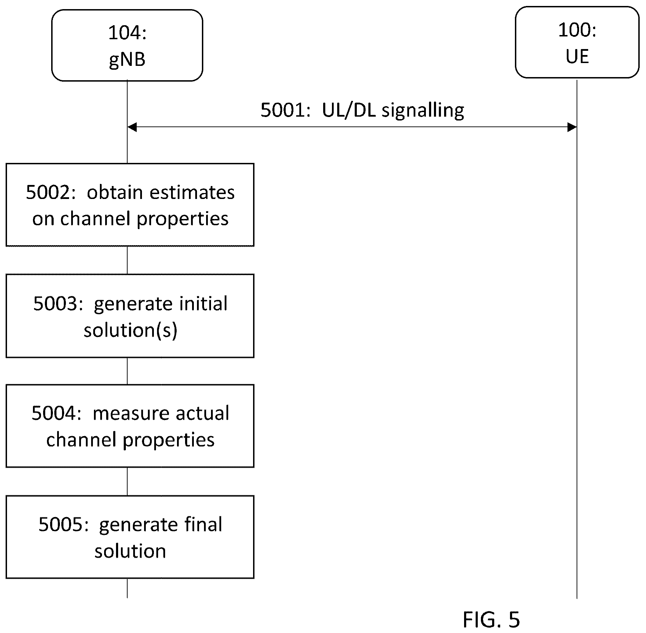

Figure 5 is a signalling chart illustrating an exemplary embodiment. In Figure 5, uplink and/or downlink signalling may be transmitted in item 5001 between an apparatus 104, such as a gNB, and one or more user devices 100, such as user equipment(s), UE. The apparatus 104 may, in item 5002, obtain estimates on channel properties by using a RADT. The channel properties may include uplink and/or downlink channel properties between the apparatus 104 and the UEs 100. In item 5003, the apparatus may, based on computed estimates on channel properties, generate at least one initial solution to an optimization problem or iterative algorithm. The optimization problem may relate to at least one of resource allocation, precoding, or power control. The apparatus 104 generate 5003 the at least one initial solution to the optimization problem or iterative algorithm using non-real-time iterations at a cloud computing engine. The apparatus 104 may in item 5004 obtain actual channel properties by real-time measurements on the channel properties. The apparatus 104 may, in item 5005, solve the optimization problem or iterative algorithm based on the actual channel properties, using the at least one initial solution as a starting point. Thus, the apparatus 104 may, in item 5005, based on the at least one initial solution, and based on the actual channel properties obtained by the real-time measurements on the channel properties, generate a final solution to the optimization problem or iterative algorithm using real-time iterations at the cloud computing engine.

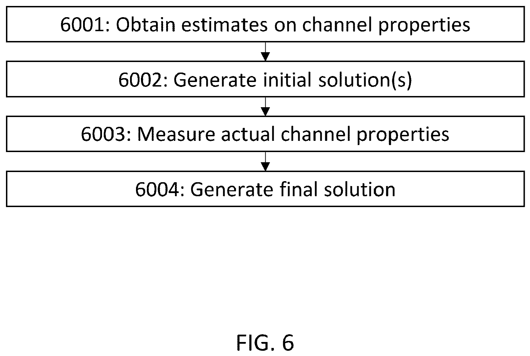

Figure 6 is a flow chart illustrating an exemplary embodiment. In Figure 6, an apparatus 104, such as a gNB, may, in item 6001, obtain estimates on channel properties by using a RADT. The channel properties may include uplink and/or downlink channel properties between the apparatus 104 and user devices 100. In item 6002, the apparatus may, based on computed estimates on channel properties, generate at least one initial solution to an optimization problem or iterative algorithm. The optimization problem may relate to at least one of resource allocation, precoding, or power control. The apparatus 104 generate 6002 the at least one initial solution to the optimization problem or iterative algorithm using non-real-time iterations at a cloud computing engine. The apparatus 104 may, in item 6003, obtain actual channel properties by real-time measurements on the channel properties. The apparatus 104 may, in item 6004, solve the optimization problem or iterative algorithm based on the actual channel properties, using the at least one initial solution as a starting point. Thus, the apparatus 104 may, in item 6004, based on the at least one initial solution, and based on the actual channel properties obtained by the real-time measurements on the channel properties, generate a final solution to the optimization problem or iterative algorithm using real-time iterations at the cloud computing engine.

The blocks, related functions, and information exchanges (messages) described above by means of FIGS. 3-6 are in no absolute chronological order, and some of them may be performed simultaneously or in an order differing from the described one. Other functions may also be executed between them or within them, and other information may be sent, and/or other rules applied. Some of the blocks or part of the blocks or one or more pieces of information can also be left out or replaced by a corresponding block or part of the block or one or more pieces of information.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

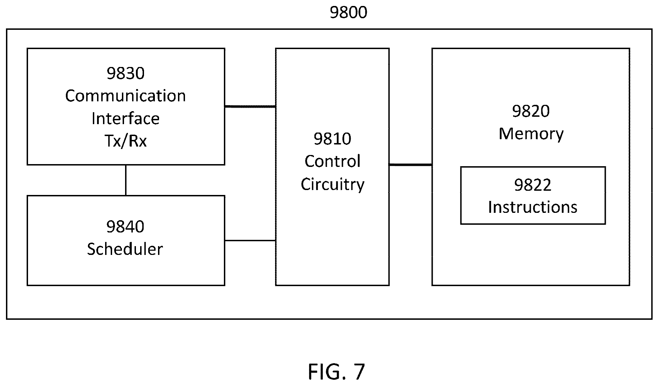

Figure 7 illustrates an example of an apparatus 9800 comprising means for performing one or more of the example embodiments described above. For example, the apparatus 9800 may be, or comprise, or be comprised in, a radio access network node 104 or a distributed unit 105 or a central unit 108.

The apparatus 9800 may comprise, for example, a circuitry or a chipset applicable for realizing one or more of the example embodiments described above. The apparatus 9800 may be an electronic device comprising one or more electronic circuitries. The apparatus 9800 may comprise a communication control circuitry 9810 such as at least one processor, and at least one memory 9820 storing instructions 9822 which, when executed by the at least one processor, cause the apparatus 9800 to carry out one or more of the example embodiments described above. Such instructions 9822 may, for example, include computer program code (software). The at least one processor and the at least one memory storing the instructions may provide the means for providing or causing the performance of any of the methods and/or blocks described above.

The processor is coupled to the memory 9820. The processor is configured to read and write data to and from the memory 9820. The memory 9820 may comprise one or more memory units. The memory units may be volatile or non-volatile. It is to be noted that there may be one or more units of non-volatile memory and one or more units of volatile memory or, alternatively, one or more units of non-volatile memory, or, alternatively, one or more units of volatile memory. Volatile memory may be for example random-access memory (RAM), dynamic random-access memory (DRAM) or synchronous dynamic random-access memory (SDRAM). Non-volatile memory may be for example read-only memory (ROM), programmable read-only memory (PROM), electronically erasable programmable read-only memory (EEPROM), flash memory, optical storage or magnetic storage. In general, memories may be referred to as non-transitory computer readable media. The term "non-transitory," as used herein, is a limitation of the medium itself (i.e., tangible, not a signal) as opposed to a limitation on data storage persistency (e.g., RAM vs. ROM). The memory 9820 stores computer readable instructions that are executed by the processor. For example, non-volatile memory stores the computer readable instructions, and the processor executes the instructions using volatile memory for temporary storage of data and/or instructions.

The computer readable instructions may have been pre-stored to the memory 9820 or, alternatively or additionally, they may be received, by the apparatus, via an electromagnetic carrier signal and/or may be copied from a physical entity such as a computer program product. Execution of the computer readable instructions causes the apparatus 9800 to perform one or more of the functionalities described above.

The memory 9820 may be implemented using any suitable data storage technology, such as semiconductor-based memory devices, flash memory, magnetic memory devices and systems, optical memory devices and systems, fixed memory and/or removable memory. The memory may comprise a configuration database for storing configuration data.

The apparatus 9800 may further comprise or be connected to a communication interface 9830, such as a radio unit, comprising hardware and/or software for realizing communication connectivity with one or more wireless communication devices according to one or more communication protocols. The communication interface 9830 comprises at least one transmitter (Tx) and at least one receiver (Rx) that may be integrated to the apparatus 9800 or that the apparatus 9800 may be connected to. The communication interface 9830 may provide means for performing some of the blocks for one or more example embodiments described above. The communication interface 9830 may comprise one or more components, such as: power amplifier, digital front end (DFE), analog-to-digital converter (ADC), digital-to-analog converter (DAC), frequency converter, (de)modulator, and/or encoder/decoder circuitries, controlled by the corresponding controlling units.

The communication interface 9830 provides the apparatus with radio communication capabilities to communicate in the wireless communication network. The communication interface may, for example, provide a radio interface to one or more UEs 100, 102. The apparatus 9800 may further comprise or be connected to another interface towards a core network 110, such as the network coordinator apparatus or AMF 111, and/or to the access nodes 104 of the wireless communication network.

The apparatus 9800 may further comprise a scheduler 9840 that is configured to allocate radio resources. The scheduler 9840 may be configured along with the communication control circuitry 9810 or it may be separately configured.

It is to be noted that the apparatus 9800 may further comprise various components not illustrated in FIG. 7. The various components may be hardware components and/or software components.

As used in this application, the term "circuitry" may refer to one or more or all of the following: a) hardware-only circuit implementations (such as implementations in only analog and/or digital circuitry); and b) combinations of hardware circuits and software, such as (as applicable): i) a combination of analog and/or digital hardware circuit(s) with software/firmware and ii) any portions of hardware processor(s) with software (including digital signal processor(s), software, and memory(ies) that work together to cause an apparatus, such as a mobile phone, to perform various functions); and c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The techniques and methods described herein may be implemented by various means. For example, these techniques may be implemented in hardware (one or more devices), firmware (one or more devices), software (one or more modules), or combinations thereof. For a hardware implementation, the apparatus(es) of example embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (for example procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways within the scope of the claims. The embodiments are not limited to the example embodiments described above, but may vary within the scope of the claims. Therefore, all words and expressions should be interpreted broadly, and they are intended to illustrate, not to restrict, the embodiments.

## Claims

1. An apparatus comprising at least one processor, and at least one memory storing instructions that, when executed by the at least one processor, cause the apparatus at least to:
based on computed estimates on channel properties, generate at least one initial solution to an optimization problem or iterative algorithm.

2. The apparatus according to claim 1, being caused to:
generate the computed estimates on the channel properties by a radio-aware digital twin, RADT.

3. The apparatus according to claim 1 or 2, being caused to:
solve the optimization problem or iterative algorithm based on actual channel properties, using the at least one initial solution as a starting point.

4. The apparatus according to claim 1, 2 or 3, being caused to:
generate the at least one initial solution to the optimization problem or iterative algorithm using non-real-time iterations at a cloud computing engine.

5. The apparatus according to any of the preceding claims, being caused to:
based on the at least one initial solution, and actual channel properties obtained by real-time measurements on the channel properties,
generate a final solution to the optimization problem or iterative algorithm using real-time iterations at a cloud computing engine.

6. The apparatus according to any of the preceding claims, wherein the optimization problem relates to at least one of resource allocation, precoding, or power control.

7. The apparatus according to claim 6, wherein the precoding comprises multi-user MIMO precoding, the apparatus being caused to:
compute estimates of spatial covariance matrices;
iteratively minimize largest eigenvalues of the estimates of the spatial covariance matrices;
measure actual spatial covariance matrices; and
solve the optimization problem by iteratively minimizing eigenvalues of the measured actual spatial covariance matrices, by using the iteratively minimized largest eigenvalues as an initialization.

8. The apparatus according to claim 6 or 7, wherein the resource allocation comprises multi-user MIMO resource allocation, the apparatus being caused to:
based on channel state information, generate channel responses and determine a channel quality indicator for each resource block group, RBG, for a selected user device;
based on the channel quality indicator, predict evolution of a user device buffer size;
select a 1^{st} candicate set of user devices, a 2^{nd} candidate set of user devices, and an initial set of resource block groups allocated for each user device in the 2^{nd} candidate set for an M number of transmission time intervals/time slot in advance, wherein a maximum value of M is determined by using age of information, AoI; and
adjust, by a scheduler, resource allocations based on real-time information received from uplink control information, UCI.

9. The apparatus according to any of the preceding claims, wherein the channel properties comprise uplink channel properties and/or downlink channel properties between the apparatus and user devices.

10. The apparatus according to claim 8 or 9, wherein the user devices are automated guided vehicles, AGV, or unmanned aerial vehicles, UAV.

11. The apparatus according to any of the preceding claims, wherein the apparatus is, comprises, or is comprised in a network node, such as a gNB.

12. A method comprising:
based on computed estimates on channel properties, generating, by an apparatus, at least one initial solution to an optimization problem or iterative algorithm.

13. A non-transitory computer readable medium comprising program instructions which, when executed by an apparatus, cause the apparatus to perform at least the following:
based on computed estimates on channel properties, generating at least one initial solution to an optimization problem or iterative algorithm.
